# EUROPEAN PATENT APPLICATION

(11) **EP 2 843 532 A1**
(43) Date of publication of application: **04.03.2015**
(21) Application number: 14183030.7
(22) Date of filing: 01.09.2014
(51) Int. Cl.: G06F 3/0487, G06F 1/16, G06F 3/048

(54) **Electronic device and method**

(30) Priority: 02.09.2013 KR 20130104889
(71) Applicant: Samsung Electronics Co., Ltd, Gyeonggi-do 443-742 (KR)
(72) Inventor: Hong, Yoon-Young, 443-742 Gyeonggi-do (KR); Chang, Jae-Young, 443-742 Gyeonggi-do (KR); Jin, Yong-Hoon, 443-742 Gyeonggi-do (KR)
(74) Representative: Jenkins, Richard Gavin

(57) **Abstract**

An electronic device and method is provided herein. An external cover is configured to cover a touchscreen in a closed position, and expose the touchscreen in an open position, the external cover having a window through which an exposed portion of the touchscreen is visible; an external cover state detection unit that detects opening/closing of an external cover is mounted in the electronic device; and a controller is configured to display one or more application UIs that is capable of executing one or more applications on a window of the external cover in a closed state of the external cover, and to display the specific application and one or more function UIs for performing the specific application on the window of the external cover when a specific application UI is selected.

## Description

### BACKGROUND OF THE INVENTION

### Field of the Invention

The present disclosure relates to an electronic device and a method of expanding a function of the electronic device, and more particularly, to an electronic device capable of expanding a function of the electronic device by using a window of an external cover mounted in the electronic device, and a method of expanding a function of the electronic device.

### Description of the Related Art

External protective cover may be mounted on electronic devices, and a window made of a transparent material may be provided on a front surface of the external cover to expose at least part of a screen of the electronic device, improving usability of the external cover.

The electronic device may detect an opened or closed state of the external cover using a magnet installed in the external cover and a hole sensor embedded in the electronic device.

Further, since the external cover itself does not include a display, the external cover may, through the window, expose a portion of a display of the electronic device, thereby allowing viewing of the display through the window.

Because of the window, a user may identify a number of display indicators, such as a missed call notification, message notifications, a display of time, date, or information relating to a currently executing application, such as a current music track on an mp3 player. This information may be viewed through the window even when the external cover is closed.

Further, when the external cover is closed, a user's gesture motion-based input may be detected through the window, so that the electronic device may perform a number of functions, such as accepting a call, rejecting a call, hanging up the phone, etc. by using a swipe motion in the window of the external cover.

### SUMMARY OF THE INVENTION

Only limited operations are permitted in electronic devices having covers including the window. In order to execute the specific application, the user must generally open the external cover. The window allows performance of assistive functions including executing a simple, discontinuous, and defined operation. Accordingly, an aspect of the present disclosure is to provide an electronic device having expanded functionality through the window of the external cover, and a corresponding method thereof.

An electronic device and method is provided herein. A touchscreen and an external cover are provided, the external cover configured to cover the touchscreen in a closed position, and expose the touchscreen in an open position, the external cover having a window through which an exposed portion of the touchscreen is visible. An external cover state detection unit that detects whether the external cover is open or closed. A controller is configured to display one or more application UIs capable of executing one or more applications on a window of the external cover in a closed state of the external cover, and display the specific application and one or more function UIs for performing the specific application on the window of the external cover when a specific application UI is selected.

In another aspect of this disclosure, an electronic device is disclosed, including an external cover configured to expose a touchscreen in a first state, and cover the touchscreen in a second state, an external cover state detection unit configured to detect the first state and the second state; and a controller configured to maintain execution of a specific application in the second state of the external cover when the second state of the external cover is generated during the execution of the specific application in the first state of the external cover.

In another aspect of this disclosure, an electronic apparatus is disclosed, including an external cover configured to expose a touchscreen in a first state, and cover the touchscreen in a second state, an external cover state detection unit configured to detect the first state and the second state, and a controller configured to executes a second application in the second state of the external cover when the second state of the external cover is generated during execution of a first application in the first state of the external cover.

In another aspect of this disclosure, an electronic apparatus is disclosed, including an external cover configured to expose a touchscreen in a first state, and cover the touchscreen in a second state, an external cover state detection unit configured to detect the first state and the second state, and a controller configured to display a result of execution of a specific function in the second state of the external cover, when the second state of the external cover is generated after execution of the specific function of a specific application in the first state of the external cover.

In another aspect of this disclosure, a method of expanding a function of an electronic device is disclosed, including displaying one or more application UIs capable of executing one or more applications on a window of the external cover in a closed state of the external cover mounted in the electronic device; executing a specific application corresponding to a specific application UI when the specific application UI among the one or more application UIs is selected, and displaying the specific application on the window of the external cover; and displaying one or more function UIs for performing the specific application on the window of the external cover on which the specific application is displayed.

In another aspect of this disclosure, a method of expanding a function of an electronic device, comprising executing a specific application in a first state of an external cover mounted in the electronic device; and maintaining execution of a specific application in a second state of the external cover, when the second state of the external cover is generated during execution of the specific application in the first state of the external cover.

In another aspect a method of expanding a function of an electronic device, including executing a first application in a first state of the external cover; and executing a second application in a second state of the external cover when the second state of the external cover is generated during execution of the first application in the first state of the external cover.

In another aspect a method of expanding a function of an electronic device, including executing a specific application in a first state of an external cover; and displaying a result of the execution of a specific function in a second state of the external cover when the second state of the external cover is generated after the specific function is executed during execution of the specific application in the first state of the external cover.

According to the electronic device and the method of expanding the function of the electronic device according to the various example embodiments of the present disclosure, it is possible to execute a specific application in a closed state of the external cover by using the window of the external cover mounted in the electronic device, execute a dual screen function, and execute a continuous function regardless of opening/closing of the external cover, thereby improving convenience of a user.

### BRIEF DESCRIPTION OF THE DRAWINGS

The present disclosure will be more apparent from the following detailed description taken in conjunction with the accompanying drawings, in which:
FIG. 1 is a diagram illustrating an electronic device according to various example embodiments of the present disclosure;
FIG. 2A and FIG. 2B are flowcharts illustrating an operation of a camera function when the external cover is closed according to another example embodiment of the present disclosure;
FIG. 3A, FIG. 3B, FIG. 3C and FIG. 3D are diagrams illustrating the operation of the camera function in when the external cover is closed according to another example embodiment of the present disclosure;
FIG. 4 is a flowchart illustrating an operation of call sending when the external cover is closed in the electronic device according to another example embodiment of the present disclosure;
FIG. 5A and FIG. 5B are diagrams illustrating the operation of the call sending when the external cover is closed in the electronic device according to another example embodiment of the present disclosure;
FIG. 6 is a flowchart illustrating an operation of processing a message received when the external cover is closed in the electronic device according to another example embodiment of the present disclosure;
FIG. 7A and FIG. 7B are diagrams illustrating the operation of processing the message received when the external cover is closed according to another example embodiment of the present disclosure;
FIG. 8 is a flowchart illustrating an operation of maintaining execution of an application regardless of whether the cover is open or closed according to another example embodiment of the present disclosure;
FIG. 9A and FIG. 9B are diagrams illustrating the operation of maintaining execution of a specific application regardless of whether the cover is open or closed according to another example embodiment of the present disclosure;
FIG. 10 is a flowchart illustrating an operation of executing a plurality of applications depending on whether the cover is open or closed in the electronic device according to another embodiment of the present disclosure;
FIG. 11A, FIG. 11B, FIG. 11C, FIG. 11D, FIG. 11E, FIG. 11F and FIG. 11G are flowcharts illustrating an operation of executing a plurality of applications depending on whether the cover is open or closed in the electronic device according to another example embodiment of the present disclosure;
FIG. 12 is a flowchart illustrating an operation of executing a specific application and confirming a result of the execution of the specific function of the specific application depending on whether the cover is open or closed according to another example embodiment of the present disclosure; and
FIG. 13A, FIG. 13B, FIG. 13C and FIG. 13D are diagrams illustrating the operation of executing the specific application and confirming the result of the execution of the specific function of the specific application depending on whether the cover is open or closed according to another example embodiment of the present disclosure.

### DETAILED DESCRIPTION OF THE EXEMPLARY EMBODIMENTS

Hereinafter, various embodiments of the present disclosure will be described in detail with reference to the accompanying drawings. In the following description, the same elements will be designated by the same reference numerals although they are shown in different drawings.

An electronic device as used in the present disclosure may include a portable terminal or a fixed terminal. The portable terminal may correspond to an easily carried and movable electronic device, which may be a video phone, a mobile phone, a smart phone, a WCDMA terminal, a Universal Mobile Telecommunication Service (UMTS) terminal, a Personal Digital Assistant (PDA), a Portable Multimedia Player (PMP), a Digital Multimedia Broadcasting (DMB) terminal, an e-book, a portable computer (notebook, tablet PC or the like), a digital camera or the like. The fixed terminal may include a desktop personal computer or the like.

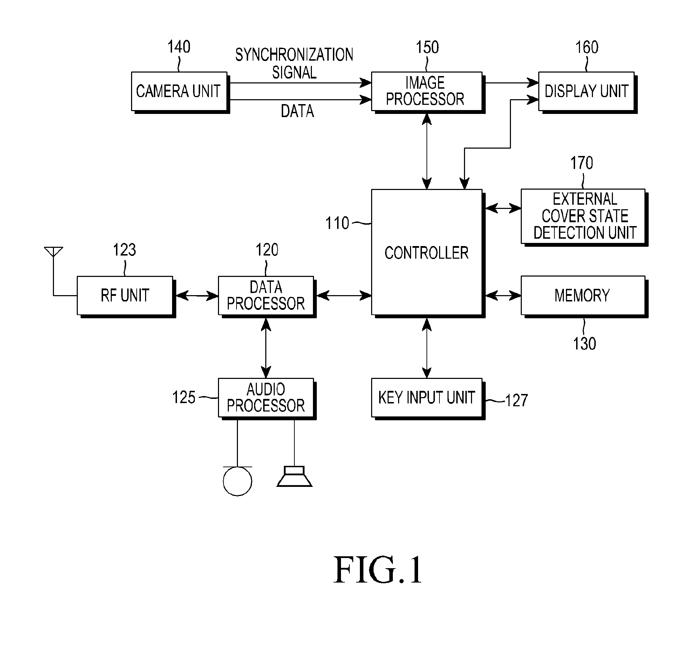

FIG. 1 is a diagram of an electronic device according to various embodiments of the present disclosure. An RF unit 123 performs a wireless communication function of a terminal. The RF unit 123 includes an RF transmitter for up-converting and amplifying a frequency of a transmitted signal and an RF receiver for low noise-amplifying a received signal and down-converting a frequency. A data processor 120 includes a transmitter for encoding and modulating the transmitted signal and a receiver for demodulating and decoding the received signal. The data processor 120 may include a modem and a codec. Here, the codec may include a data codec for processing packet data, etc., and an audio codec for processing an audio signal, such as voice. An audio processor 125 performs a function of reproducing a received audio signal that is output from the audio codec of the data processor 120 or transmitting a transmitted audio signal that is generated from a microphone to the audio codec of the data processor 120.

A key input unit 127 includes keys for inputting number and character information and function keys for setting various functions.

A memory 130 may include a program memory and data memories. The program memory may store programs for controlling programs for controlling a general operation of the terminal, and programs for controlling so as for various functions of the electronic device to be performed by using a window of an external cover mounted in the electronic device. Further, the data memory may perform a function of temporarily storing data generated during the performance of the programs. Further, the memory 130 may store one or more elements of application information displayable through the window of the external cover and one or more application user interface or "UI" information (a "UI" indicating, for example, an icon or another visual indication) corresponding to the one or more elements of application information in a closed state of the external cover mounted in the electronic device according to the example embodiment of the present disclosure. A controller 110 performs a function of controlling a general operation of the electronic device.

The controller 110 may detect a first state or a second state as an opened or closed state of the external cover mounted in the electronic device according to an opening/closing signal of the external cover received from an external cover opening/closing detection unit 170 according to the various embodiments of the present disclosure. When the first state is the opened state of the external cover, the second state may be the closed state of the external cover, and when the first state is in the closed state of the external cover, the second state may be the opened state of the external cover.

The camera unit 140 photographs image data, and includes a camera sensor for converting a photographed optical signal to an electrical signal and a signal processor for converting a photographed analog image signal to digital data. Here, it is assumed that the camera sensor is a CCD or CMOS sensor, and the signal processor may be implemented by a Digital Signal Processor (DSP). Further, the camera sensor and the signal processor may be implemented integrally or separately.

The image processor 150 executes Image Signal Processing (ISP) for displaying an image signal output from the camera unit 140 to a display unit 160, and the ISP performs functions such as gamma correction, interpolation, spatial change, image effect, image scale, AWB, AE, AF and the like. Accordingly, the image processor 150 processes the image signal output from the camera unit 140 in the unit of frames and outputs frame image data in accordance with a characteristic and a size of the display unit 160. Further, the image processor 150 includes an image codec and performs a function of compressing the frame image data displayed on the display unit 160 through a set method or reconstructing the compressed frame image data into original frame image data. Here, the image codec may include a JPEG codec, an MPEG4 codec, a Wavelet codec or the like. It is assumed that the image processor 150 includes an On Screen Display (OSD) function and outputs on screen display data in accordance with a display size displayed under a control of the controller 110.

The display unit 160 displays an image signal output from the image processor 150 and displays user data output from the controller 110. Here, the display unit 160 can use an LCD. In this case, the display unit 160 includes an LCD controller, a memory for storing image data, an LCD display device, and the like. When the LCD is implemented in a touch screen type, the LCD may be operated as an input unit, and the display unit 160 displays keys such as the key input unit 127.

Further, in a case where the display unit 160 is used as a touch screen unit according to the implementation of the display unit 160 by the touch screen scheme, the touch screen unit is formed of a Touch Screen Panel (TSP) including a plurality of sensor panels, and the plurality of sensor panels may include an electrostatic sensor panel capable of recognizing a touch of a hand, and an electromagnetic inducing sensor panel capable of sensing a minute touch, such as a touch pen.

The external cover state detection unit 170 detects whether the cover is in an open or closed position. The external cover state detection unit 170 may include a hall IC sensor, and transmit an opening/closing signal according to a contact of a magnet included in the external cover mounted in the electronic device to the controller 110.

The external cover covers a touchscreen in a closed position, and exposes the touchscreen in an open position. The external cover has a window through which an exposed portion of the touchscreen is visible.

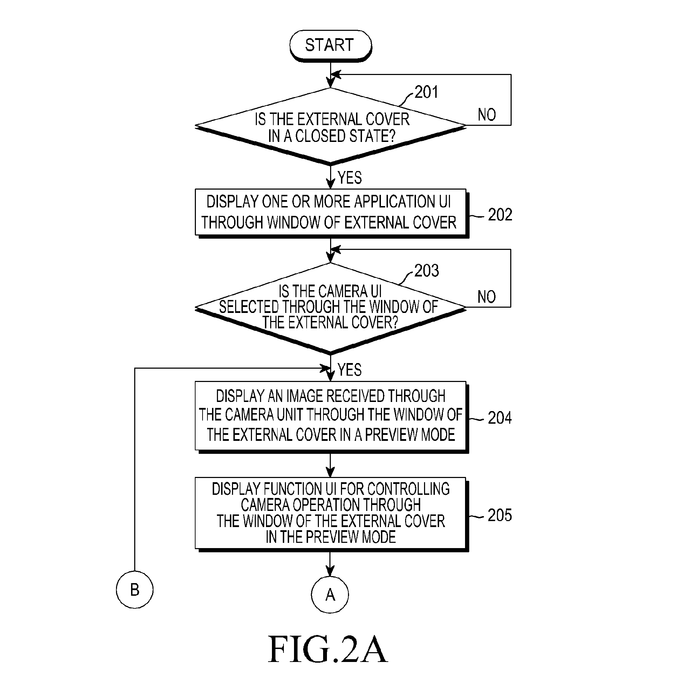

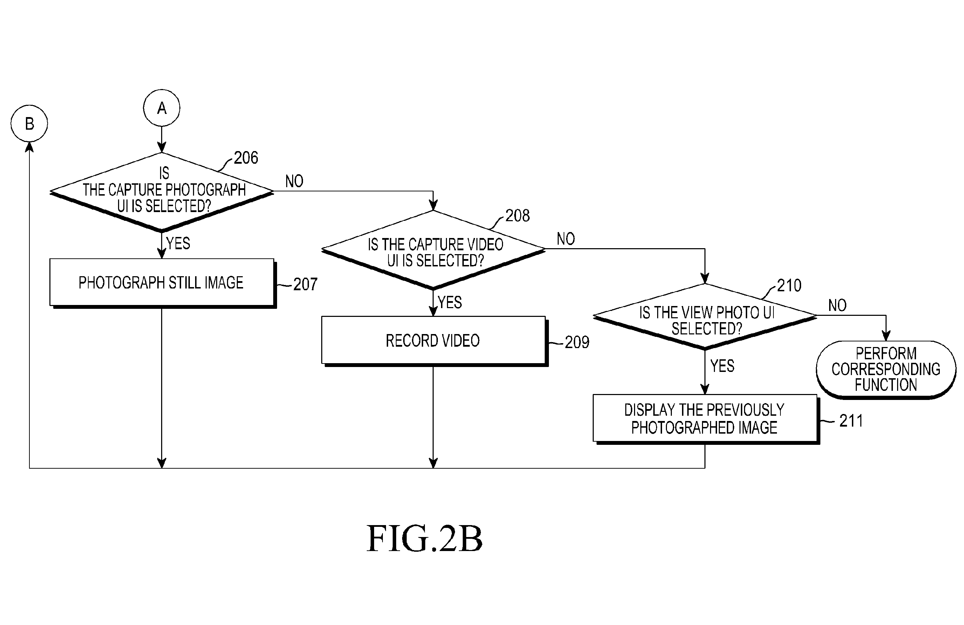

An operation of performing various functions by using the window of the external cover mounted in the electronic device in the aforementioned electronic device will now be described in detail, with reference to FIGS. 2 to 13.

In an example embodiment of the present disclosure, the applications, which are displayable through the window of the external cover, are executed and displayed even in the closed state of the external cover. The type of applications executable through the window of the external cover may be designated automatically or manually. The present disclosure discusses the operation of a camera, the call sending, and the message reception with the use of an external cover, but it is understood that the present disclosure is not limited to these recited embodiments.

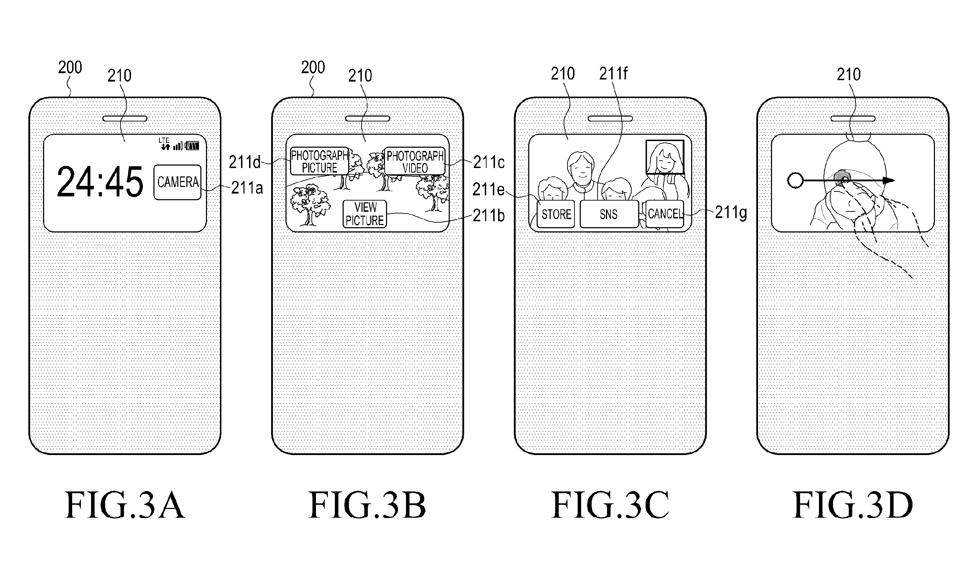

FIGS. 2A and 2B are flowcharts illustrating an operation of a camera function when the external cover is closed according to another example embodiment of the present disclosure, and FIGS. 3A to 3D are diagrams illustrating the operation of the camera function in when the external cover is closed according to another example embodiment of the present disclosure.

Hereinafter, the example embodiment of the present disclosure will be described in detail with reference to FIGS. 1, 2A-2B and 3A-3D.

Referring now to FIGS. 2A and 2B, in operation 201, when a signal is received from the external cover state detection unit 170, the controller 110 may determine whether the external cover is open or closed.

In operation 202, the controller 110 may detect and display one or more elements application information, and/or one or more elements application UI(s) corresponding to the one or more elements application information. This may be displayed through the window of a closed external cover, from the memory 130. Further, the controller 110 may display the application UI(s) on the window of the external cover while it also displays a basic screen image, such as a current time and/or date.

In operation 203, when the controller 110 detects selection of a camera UI from among the one or more displayed application UI(s), the controller 110 may switch the display to a preview mode, and, in operation 204, display a preview image received from the camera unit 140 through the window of the closed external cover.

Further, in operation 205, the controller 110 may display one or more function UIs for operating the camera. The function UIs may be displayed through the window of the external cover in the preview mode.

In one example embodiment of the present disclosure, one or more function UIs for performing the camera operation may include a capturing a photograph, capturing a video, and a picture view setting. However, it should be understood that other function UIs may be added, changed, or deleted, either automatically or by manual setting.

Referring now to FIG. 2B, in operation 206, if the controller 110 detects selection of the capture photograph UI from among function UI(s) in operation 206, then in operation 207, the controller 110 may capture a still image photograph.

In operation 208, if the controller 110 detects selection of the capture video from the function UI(s), then in operation 209, the controller 110 may record video.

In operation 210, if the controller 110 detects that the view photo UI is selected from among the function UI(s) then in operation 211, the controller 110 may display a previously photographed image.

An example of the operation of performing the camera function through the window of a closed external cover will be described below with reference to FIGS. 3A to 3D. As illustrated in FIG. 3A, the controller 110 may display a camera UI 211a corresponding to a camera application on a window 210 of an external cover 200 in the closed state of the external cover 200 mounted in the electronic device.

When the camera UI 211a is selected according to a touch input generated on the display through the window 210 of the external cover, the controller 110 may display a photograph picture UI 211b, a photograph video UI 211c, and a view picture UI 211d, which are function UIs capable of operation the camera. These are displayed through the window 210, which has also been switched to a picture preview mode, as illustrated in FIG. 3B.

Alternatively, a specific key (such as, for example, a power key, mounted on a lateral surface of the electronic device) may be activated in a particular way (such as being held for a predetermined quantity of time). In response, the state of the window of the external cover may be switched to the state illustrated in FIG. 3B.

When the photograph picture UI 211b is selected (by, for example, a touch motion generated on the window 210), the controller 110 may display a number of sub-option UIs, including a storage UI 211e, SNS (social networking) UI 211f, and a cancellation UI 211g. When the storage UI 211e or the cancellation UI 211g is selected, the controller 110 may store the photograph or cancel the current photography operation, respectively, before returning to the preview mode illustrated in FIG. 3B.

Selection of the SNS UI 211f may cause the controller 110 may transmit the photographed still image to a specific receiver through communication, such as Bluetooth, Wi-Fi, and E-mail.

Further, when the picture view UI 211d is selected, the controller 110 may display a recently photographed image or the last photographed image on the display through the window 210, as illustrated in FIG. 3D. In this case, the previously photographed and stored images may be sequentially displayed through swipe motions input to the display through the window 210.

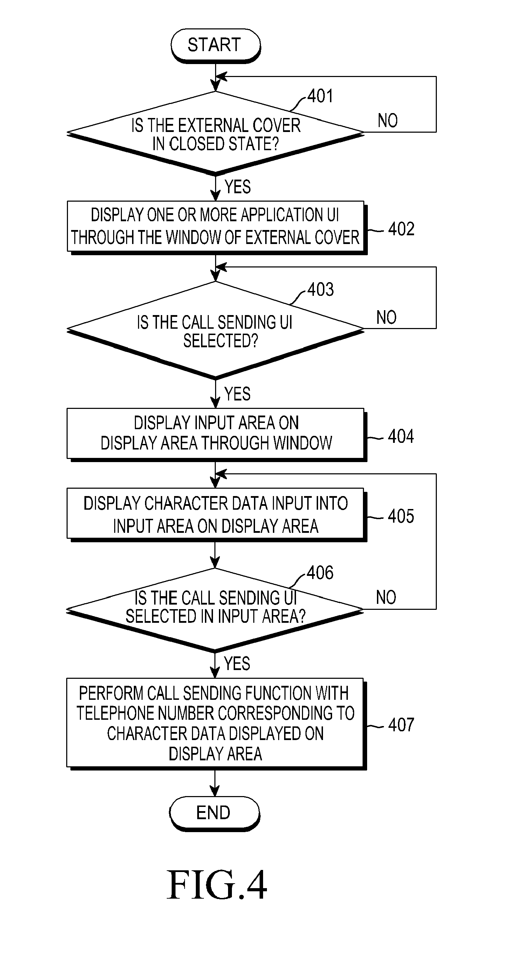

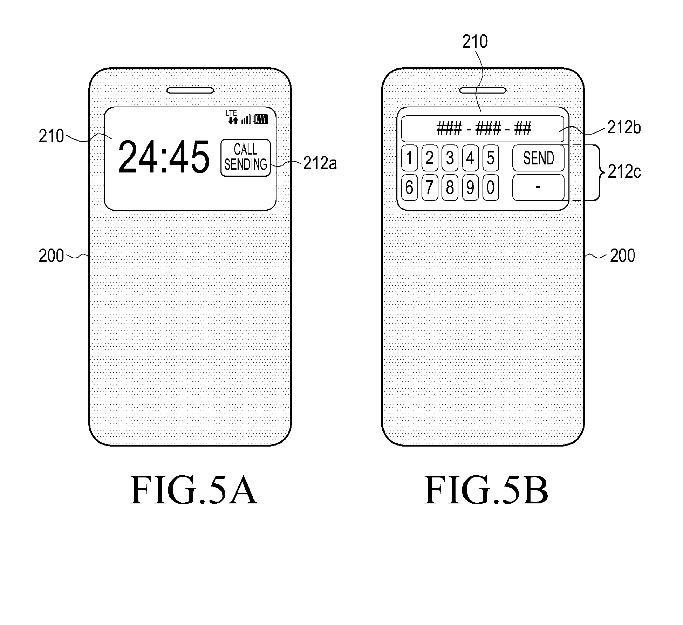

FIG. 4 is a flowchart illustrating an operation of call sending when the external cover is closed in the electronic device according to another example embodiment of the present disclosure, and FIGS. 5A and 5B are diagrams illustrating the operation of the call sending when the external cover is closed in the electronic device according to another example embodiment of the present disclosure. Hereinafter, the example embodiment of the present disclosure will be described in detail with reference to FIGS. 4, 5A, 5B and FIG. 1.

Referring to FIGS. 4 and 5, in operation 401, when a signal the external cover is received from the external cover is closed is received from the external cover state detection unit 170, the controller 110 may detect the external cover is closed.

In operation 402, the controller 110 may retrieve one or more elements of application information and/or one or more elements application UI(s) corresponding to the one or more elements of application information from the memory 130, and display the application UIs on the display through the window of the closed external cover. The controller 110 may also display a basic screen image, including information such as a current time and a date.

In operation 403, the controller 110 may detect selection of a call sending UI (e.g., a dialer application) from among the one or more application UIs. In operation 404, the controller 110 may thus display a display area and input area through the window of the external cover.

In operation 405, the controller 110 may display character data input through the input area on the display area in the window of the external cover. In operation 406, if the controller 110 detects selection of a call sending UI through the input area, then in operation 407, the controller 110 may execute a call sending function with a telephone number corresponding to the character data displayed on the display area.

An example of the operation of performing the call sending function through the window of the closed external cover 4 will be described below with reference to FIGS. 5A and 5B.

As illustrated in FIG. 5A, the controller 110 may display a call sending UI 212a on the window 210 of the external cover 200 in the closed state of the external cover 200 mounted in the electronic device.

When the call sending UI 212a is selected according to a touch motion received by the touch display 160 through the window 210 of the closed external cover, the controller 110 may display a display area 212b (for showing the number inputted) and an input area 212c (for receiving number inputs) on the window 210, as illustrated in FIG. 5B. When a phone number is input (through the input area 212c) displayed on the display area 212b, and "send" is selected in the input area 212c, the controller 110 may execute a call sending function with the input telephone number.

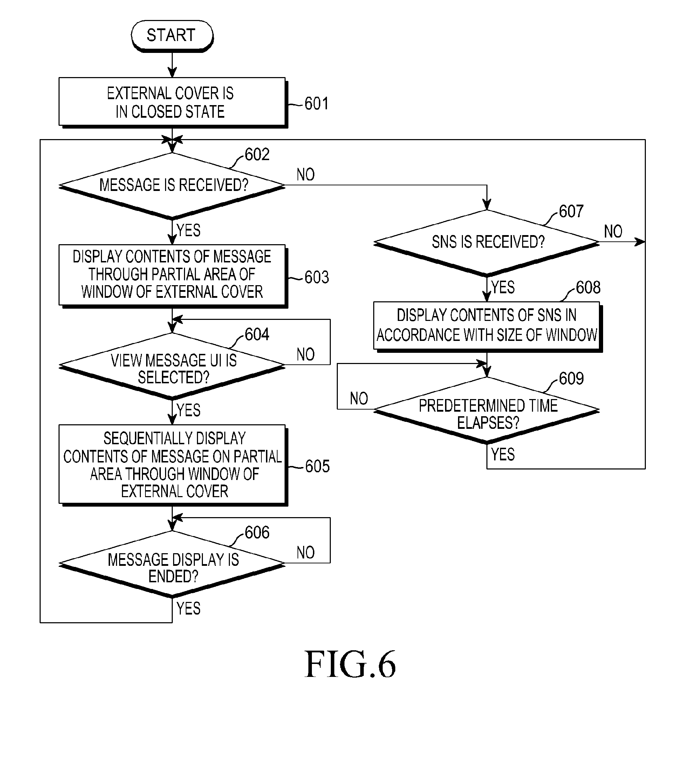

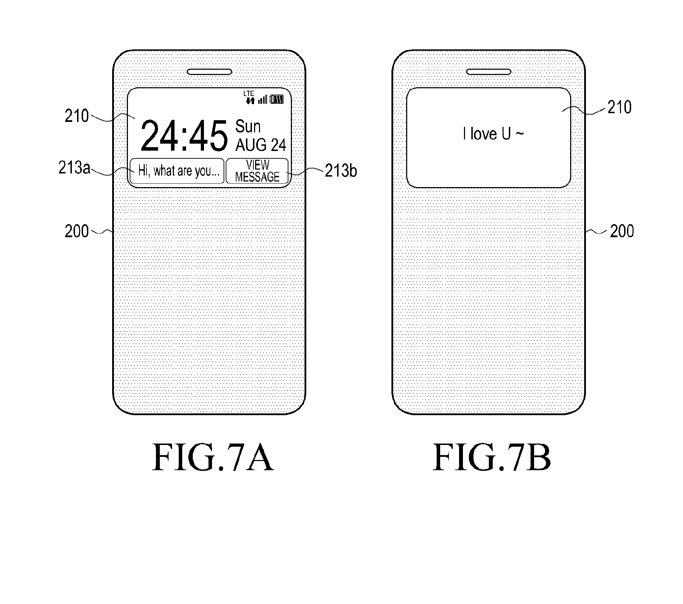

FIG. 6 is a flowchart illustrating an operation of processing a message received when the external cover is closed in the electronic device according to another example embodiment of the present disclosure, and FIGS. 7A and 7B are diagrams illustrating the operation of processing the message received when the external cover is closed according to another example embodiment of the present disclosure.

Hereinafter, the example embodiment of the present disclosure will be described in detail with reference to FIGS. 1, 6, 7A, and 7B.

Referring to FIG. 6, in operation 601, a signal indicating that the external cover is closed may be received from the external cover state detection unit 170. The controller 110 may thus detect that the external cover is closed.

When the controller 110 determines that a message is received in the closed state of the external cover in operation 602, then in operation 603, controller 110 may display contents of the received message on a partial area of the display through the window of the external cover.

When all of the contents of the received message are not displayed on the partial area of the window, the controller 110 may display a message view UI on the window.

In operation 604, when the controller 110 determines that the message view UI is selected, then in operation 605, all of the contents of the message may be sequentially displayed on the partial area on the display through the window of the external cover.

When the controller 110 detects selection of the message view UI, the controller 110 may display all of the contents of the message over the entire area of the window.

When the controller 110 detects that the external cover opened, the controller 110 may instead display the received message on the display unit 160.

Further, in operation 606, when the controller 110 detects termination of the display of the message, the controller 110 may end the display of the message contents.

Otherwise, in operation 607, when the controller 110 determines that a SNS is received while the external cover is closed, the controller 110 may display contents of the SNS, and in operation 608, the contents may be fit to a portion of the display corresponding to the size of the window of the external cover. When the controller 110 determines that a predetermined time has elapsed since beginning the display of the content of the SNS, the controller 110 may terminate the display of the contents of the SNS through the window.

When the controller 110 detects that the external cover is open, the controller 110 may display the entire content of the received SNS on the display unit 160 of the electronic device.

Alternatively, when the controller 110 detects that the external cover is open, the controller 110 may display an application corresponding to the received SNS on the display unit 160 of the electronic device.

An example of the operation of performing the message and SNS reception function through the window of a closed external cover in will be described below with reference to FIG. 7.

When a message is received while the external cover 200 is closed, the controller 110 may display the contents of the received message on a predetermined area of the display through the window 210. This area may be, for example, a lower side area 213a, as seen in FIG. 7A. When the full received message is not displayed in the lower side area 213a, the controller 110 may display a message view UI 213b that is capable of sequentially displaying the contents of the received message in the lower side area 213a. The controller 110 may sequentially display all of the contents of the received message in the lower side area 213a, or on the entire area of the window 210 through the selection of the message view UI 213b. When the controller 110 determines that the external cover 200 is open, the controller 110 may display the contents of the received message on the display unit of the electronic device.

Furthermore, when the SNS is received while the external cover 200 is closed, as illustrated in FIG. 7B, the controller 110 may display the content of the received SMS with adjustments made to size to, thus accommodating display through the window 210 for a predetermined time.

When the controller 110 detects that the external cover 200 is open, the controller 110 may display the entire contents of the received SNS on the display unit of the electronic device.

When the controller 110 detects that the external cover 200 is open, the controller 110 may execute an application corresponding to the received SNS, and display the application corresponding to the received SNS on the display unit of the electronic device.

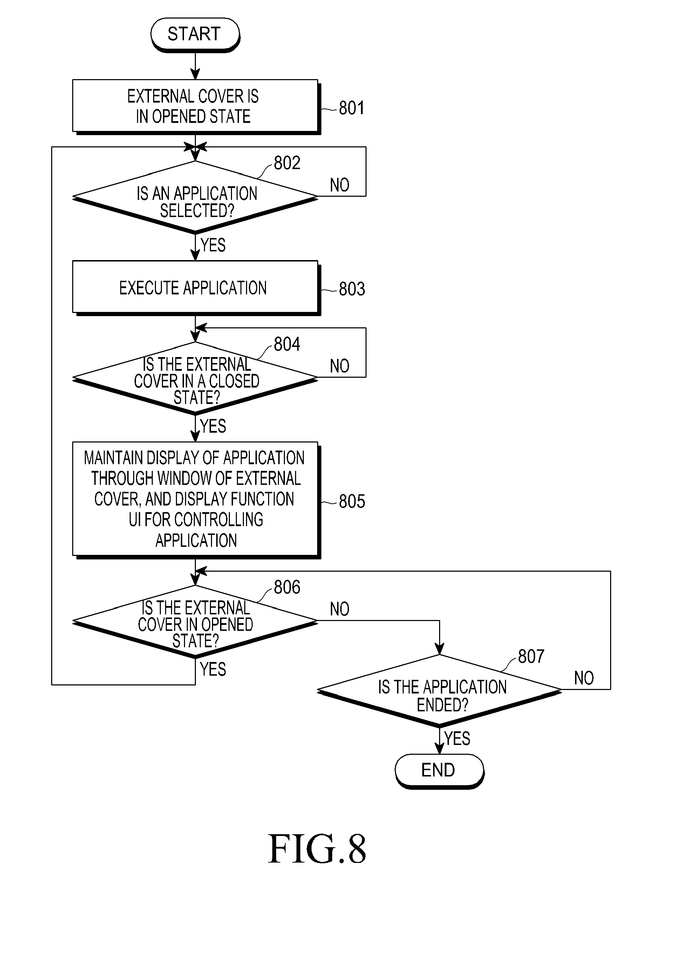

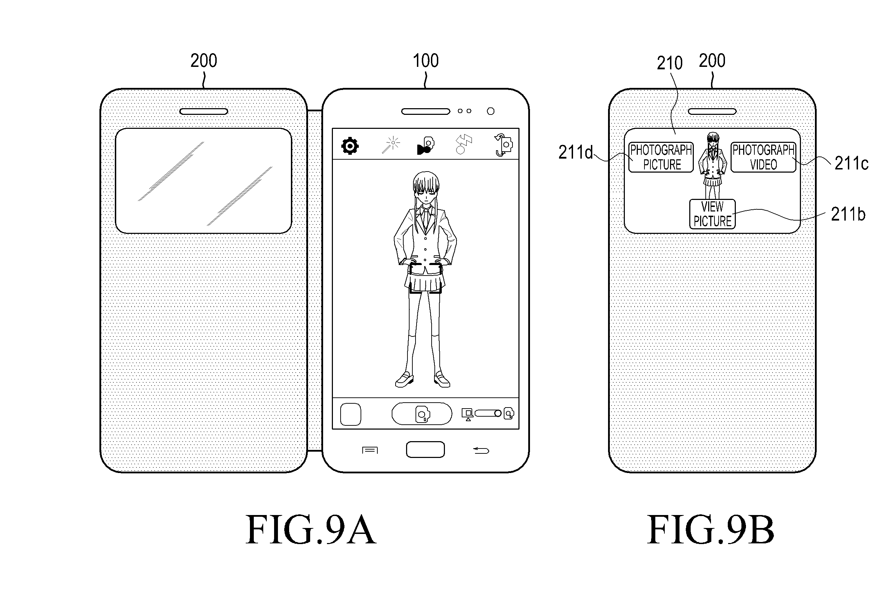

FIG. 8 is a flowchart illustrating an operation of maintaining execution of an application regardless of whether the cover is open or closed according to another example embodiment of the present disclosure, and FIGS. 9A to 9B are diagrams illustrating the operation of maintaining execution of a specific application regardless of whether the cover is open or closed according to another example embodiment of the present disclosure.

Hereinafter, the example embodiment of the present disclosure will be described in detail with reference to FIGS. 1, 8, 9A, and 9B.

Referring to FIG. 8, in operation 801, the controller 110 may detect that the external cover is presently open. In operation 802, the controller 110 may detect whether a "specific" application is selected. In operation 803, if the specific operation is selected, the controller 110 may execute the specific application and display the application on the display unit 160.

In operation 804, a signal indicating that the external cover is closed may be received from the external cover state detection unit 170. This may indicate to the controller 110 that the cover has transitioned from an initially open state to a closed state. In operation 805, the controller 110 may maintain execution of the application and display the specific application through the window of the external cover, and display one or more function UIs for controlling the specific application through the window of the external cover.

In operation 806, when a signal indicating that the external cover is now open is received from the external cover state detection unit 170, the controller 110 may detect that the external cover is open, and display the specific application on the display unit 160 while maintaining the execution of the specific application.

Otherwise, in operation 807, if the controller 110 detects selection indicating termination of the specific application, the controller 110 may end the execution of the specific application.

In some embodiments, the execution of the specific application may be ended in a closed state of the external cover, or the electronic device may end the execution of the specific application.

An example of the operation of maintaining the execution of the specific application regardless of the opened/closed state of the external cover will be described below with reference to FIGS. 9A and 9B.

In FIG. 9A, while the external cover 200 is open, the camera application is executed, and a preview image is displayed in a preview mode on the display unit 160. When the external cover is closed, the controller 110 may display the preview mode through the window 200, including the photograph picture UI 211b, the photograph video UI 211c, and the view picture UI 211d, which are function UIs capable of controlling the camera functionality. The respective UIs may be displayed through the window 210 of the external cover 200, as illustrated in FIG. 9B.

Accordingly, as shown, the camera is maintained even when the cover transitions from an open state to a closed state. When in an open state, the controller 110 may display a preview mode utilizing the the display unit, as illustrated in FIG. 9A. When in a closed state, the controller 110 may display the preview mode including various UIs on the display unit 160 through the window, as illustrated in FIG. 9B.

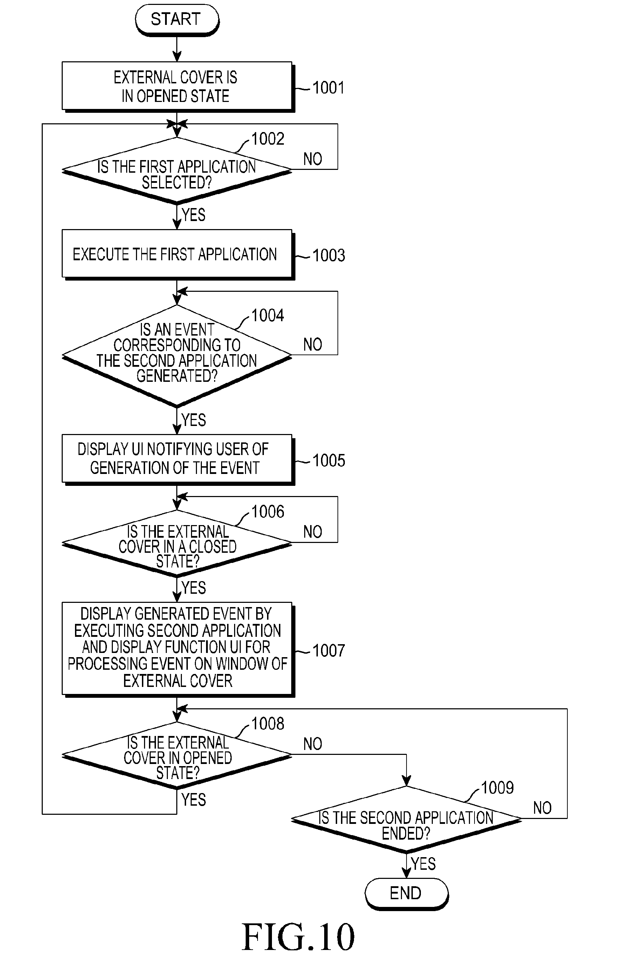

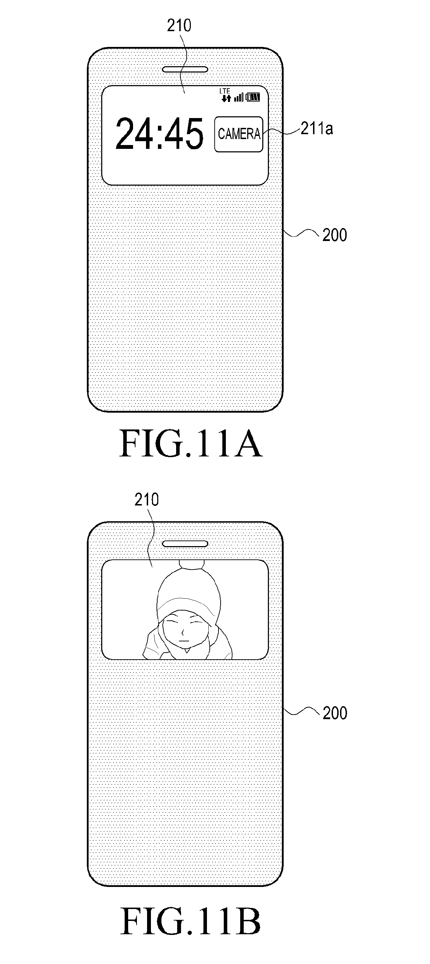

FIG. 10 is a flowchart illustrating an operation of executing a plurality of applications depending on whether the cover is open or closed in the electronic device according to another embodiment of the present disclosure, and FIGS. 11A and 11B are flowcharts illustrating an operation of executing a plurality of applications depending on whether the cover is open or closed in the electronic device according to another example embodiment of the present disclosure.

Hereinafter, the example embodiment of the present disclosure will be described in detail with reference to FIGS. 1, 10, 11A, and 11B. When a user selects execution of two applications in the electronic device, the controller 110 may automatically or manually display the execution of one application through the display unit when the cover is open, and display the other application through the window the when the cover is closed.

Referring to FIG. 10, in operation 1001, the controller 110 may determine that the external cover is open. In operation 1002, the controller 110 may determine that a first application is selected for execution. In response, in operation 1003, the controller 110 may execute the first application and display the first application on the display unit 160.

In operation 1004, when the controller 110 detects that an event corresponding to a second application is generated, then in operation 1005, while the first application continues executing and the external cover remains opened, the controller 110 may generate a UI notifying the user of the generation of the event, and display the UI on a predetermined area of the display unit 160.

In operation 1006, when the cover is closed, a signal may be generated and received from the external cover state detection unit 170, and according to the lapse of a predetermined quantity of time, in operation 1007, the controller 110 may determine the closed state of the cover, and in response, execute the second application and display data or content associated with the generated event through the window of the external cover. In operation 1007, the controller 110 may display one or more function UIs for processing the event through the window of the external cover.

In operation 1008, when the cover is opened, a signal indicating the opened state of the external cover may be received from the external cover state detection unit 170, and in response, the controller 110 may again display the first application on the display unit 160.

Otherwise, when the controller 110 determines that termination of the second application is selected, the controller 110 may end the execution of the second application.

It is understood that although the above embodiment is written with respect to identifying an event generated through a open the external cover during execution of a first application while the cover is *open,* it is also possible to define an operation identifying the event generated through a closed the external cover during the execution of the first application when the cover is *closed.*

When a user selects execution of two applications in the electronic device, the controller 110 may automatically or manually display the execution of one application through the display unit when the cover is open, and display the other application through the window the when the cover is closed.

One example embodiment illustrating the execution of a plurality of applications according to the state of the external cover will be described below with reference to FIGS. 11A and 11B.

As illustrated in FIG. 11A, when the camera application UI 211a is selected by a touch motion generated through the window 210 of a closed external cover 200, the controller 110 may switch the mode of the window to the preview mode and display an image received from the camera unit 140 on the window 210, as illustrated in FIG. 11B.

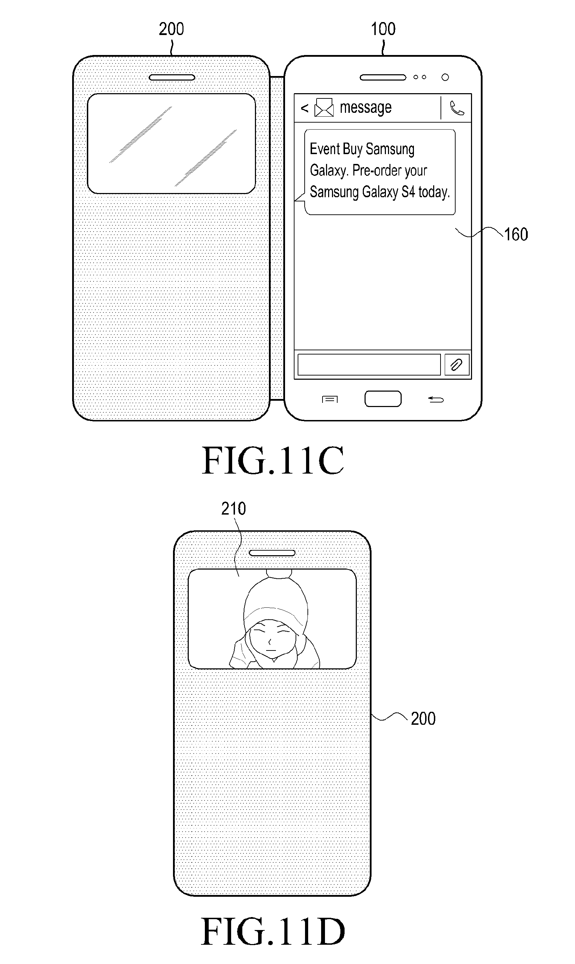

When a message is received during the performance of the preview mode of the camera application while the external cover 200 is closed, the controller 110 may display a UI notifying receival of a message in an adjusted area of the window 210 (not shown). If the external cover 200 is opened before the lapse of a predetermined time, the controller 110 may display contents of the message on the display unit 160 of the electronic device 100 as illustrated in FIG. 11C.

When the external cover 200 is closed during the display of the contents of the message, the controller 110 may return to the preview mode of the camera application and display an image received through the camera unit 140 through the window of the external cover 200 as illustrated in FIG. 11D.

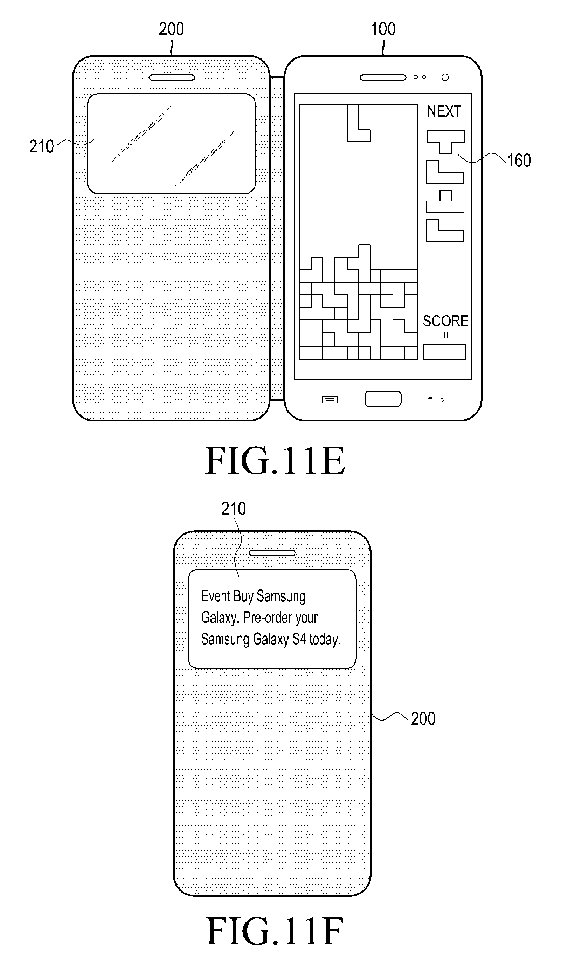

Alternatively, when a message is received during display and execution of a game application on the display unit 160 of the electronic device 100 while the external cover 200 is open, as illustrated in FIG. 11E, the controller 110 may display a UI notifying a user of receival of a message in an adjusted area of the window 210(not shown), when the closed state of the external cover 200 is generated before lapse of a predetermined time, the controller 110 may display contents of the received message on the window 210 of the external cover 200, as illustrated in FIG. 11F.

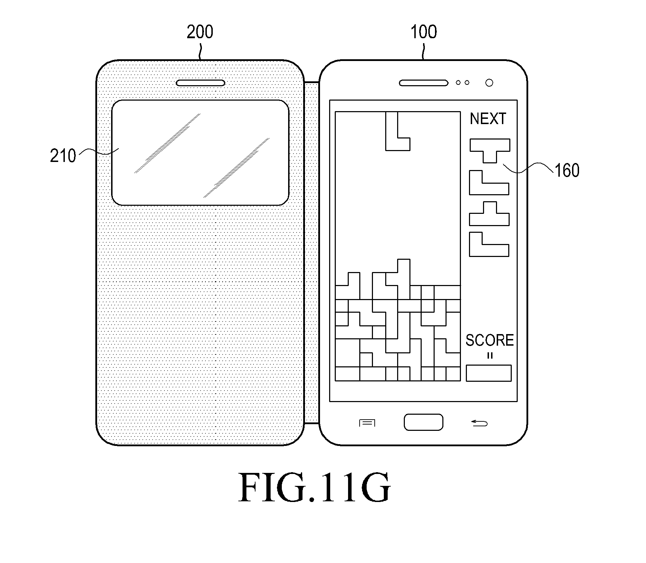

IF the external cover 200 is again opened during the display of the contents of the message on the window 210 of the external cover, the controller 110 may execute the game application, recalling the state of the game application before the depicted in FIG. 11F, and display the execution of the game application on the display unit 160, as illustrated in FIG. 11G.

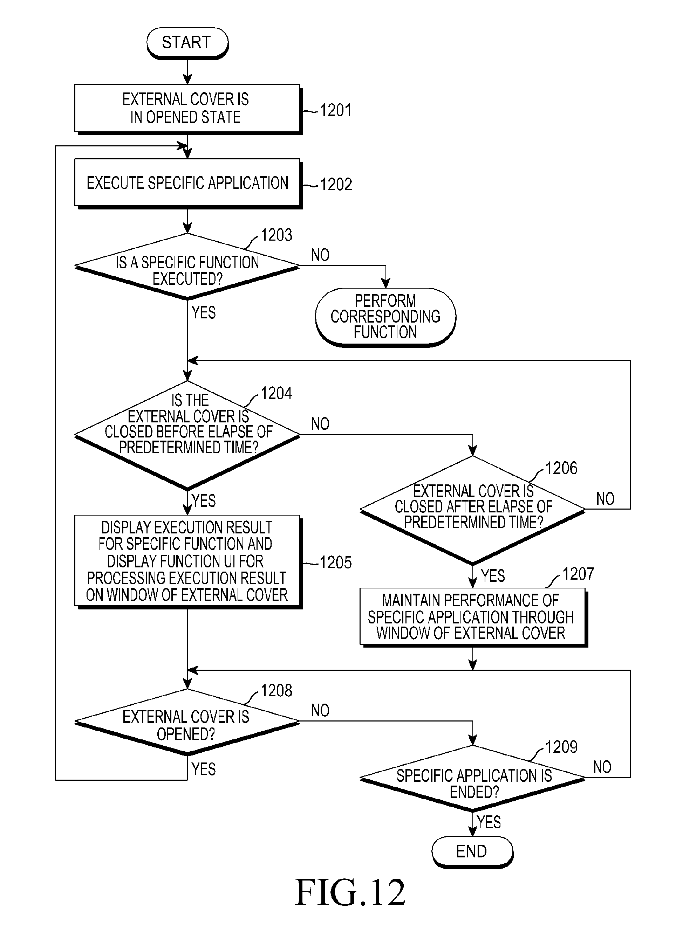

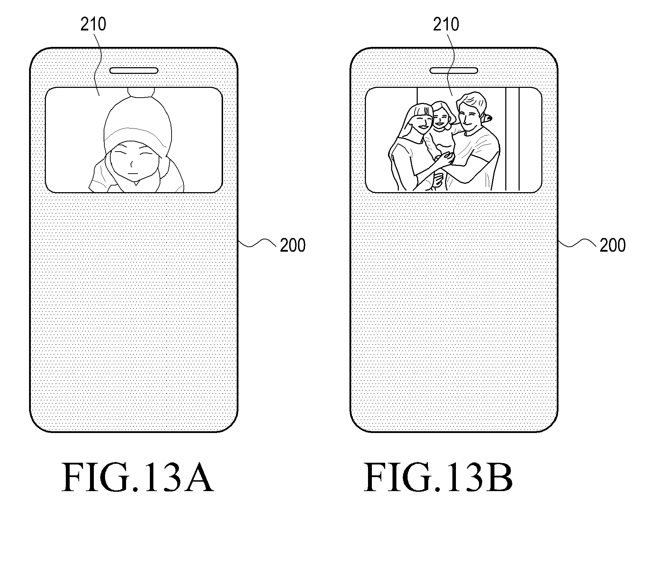

FIG. 12 is a flowchart illustrating an operation of executing a specific application and confirming a result of the execution of the specific function of the specific application depending on whether the cover is open or closed according to another example embodiment of the present disclosure, and FIGS. 13A and 13B are diagrams illustrating the operation of executing the specific application and confirming the result of the execution of the specific function of the specific application depending on whether the cover is open or closed according to another example embodiment of the present disclosure.

Hereinafter, the example embodiment of the present disclosure will be described in detail with reference to FIGS. 1, 12, 13A, and 13B.

Referring to FIG. 12, in operation 1201, the controller 110 may determine whether the external cover 200 is open. If it is, then in operation 1202, the controller 110 may detect whether a selected specific application is executed. In operation 1203, the controller 110 may determine whether a specific function of the specific application is executed. For example, a specific function may be displayed through the window of the external cover. The controller 110 may confirm the opened/closed state of the external cover 200 after the execution of the specific function of the specific application.

In operation 1204, if controller 110 detects that the external cover is closed before the lapse of the predetermined time, in operation 1205 the controller 110 may display an execution result for the specific function on the and a function UI for processing an execution result through the window of the external cover 210.

However, in operation 1206, if the controller 110 detects that external cover was closed *after* the lapse of the predetermined time, the controller 110 may display the specific application on the window of the external cover while maintaining the execution of the specific application.

When the closed state of the external cover is generated after the execution of a specific application in the opened state of the external cover regardless of the time, the window of the external cover displays a result of execution of a specific function and UI for processing the result of the execution.

When a signal indicating that the external cover was closed is received from the external cover state detection unit 170 during the performance of operation 1206, the controller 110 may, in operation 1208 determine that the external cover is in the open state, and thus, in operation 1202, display the specific application on the display unit 160 by executing the specific application.

In operation 1209, when the controller 110 determines that ending of the specific application is selected, the controller 110 may end the execution of the specific application.

The execution of the specific application may be ended with the external cover open, or the electronic device may end the execution of the specific application.

Alternatively, an operation including executing the specific application with the external cover open, and confirming an execution result for the specific function of the specific application with the external cover closed may also be equally performed.

The execution of the specific application and display of the execution result according to the state of the external cover in FIG. 12 will be described below as an example with reference to FIGS. 13A and 13B. In Fig. 12 illustrates an example that the execution of the specific application in the opened state of the external cover and the display a result of execution of the specific application in the closed state of the external cover, but Fig.13A and Fig.13B, illustrate the execution of the specific application in the closed state of the external cover and the display a result of execution of the specific application in the opened state of the external cover.

When the camera application UI is selected with a closed external cover 200, the controller 110 switches the display to the preview mode as illustrated in FIG. 13A. The preview mode includes display of a preview image received from the camera unit 140 in the window 210. When a photography UI displayed on the window 210 is selected in the preview mode, the controller 110 may capture the photographed image on the window 210 as illustrated in FIG. 13B.

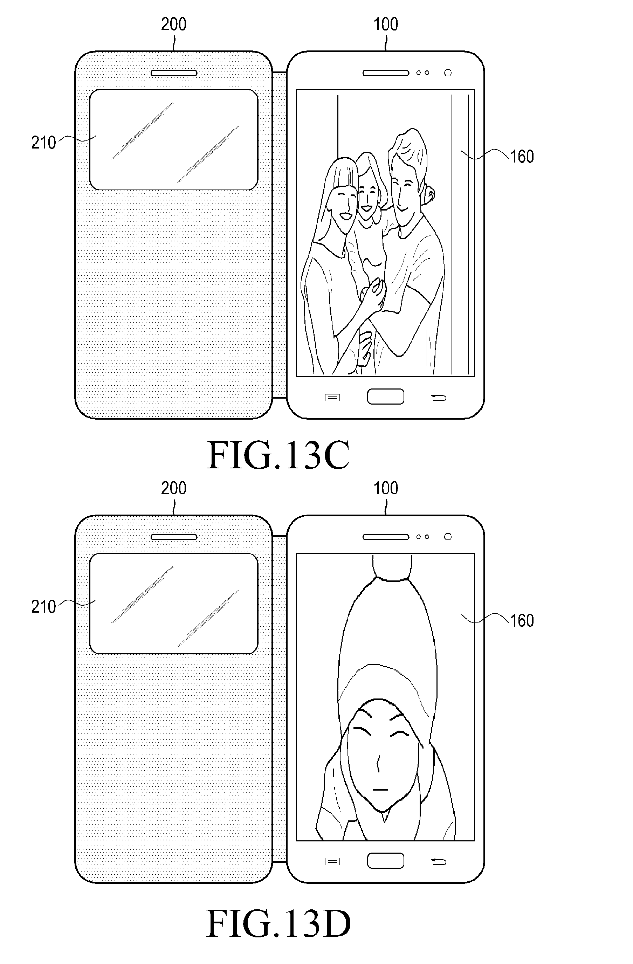

When the external cover 200 is opened *before* lapse of a predetermined time after the display of the photographed image on the window 210 as illustrated in FIG. 13B, the controller 110 may display the image, which is displayed with a small size on the window 210 in FIG. 13B with a full size on the display unit 160 of the electronic device 100 as illustrated in FIG. 13C.

When the external cover 200 is opened generated *after* the lapse of the predetermined time after the display of the photographed image on the window 210 as illustrated in FIG. 13B, the controller 110 may switch to the preview mode of the camera application and display the preview image received through the camera unit 140 as illustrated in FIG. 13D.

The electronic device and the method of expanding the function of the electronic device according to the various example embodiments of the present disclosure may be implemented by computer readable code in a computer readable recording medium. The computer-readable recording medium includes all the types of recording devices in which data readable by a computer system are stored. As for such a recording medium, for example, a ROM, a RAM, an optical disc, a magnetic tape, a floppy disc, a hard disc, or a non-volatile memory may be used, and a medium implemented in a type of carrier wave (for example, transmission through the Internet) may also be included in such a recording medium. In addition, the computer-readable recording medium may be stored with codes which are distributed in computer systems connected by a network such that the codes can be read and executed by a computer in a distributed method.

In the various example embodiments of the present disclosure, data is displayed through the window of the external cover at least partially for convenience. In the various example embodiments of the present disclosure, the display of the data on the window of the external cover may be interpreted to mean that data is displayed on a partial region of the display unit of the electronic device, and the partial region is visible through the window of the external cover.

The various example embodiments of the present disclosure may be equally applied to an electronic device having a mounted external cover equipped with its own display function and a window, as well as an electronic device equipped with a cover that has no display function, but includes the window formed of a transparent material.

According to one example embodiment of the present disclosure, the controller 110 may display one or more application UIs capable of executing one or more applications visible through the window of the external cover while the external cover is closed. When a specific application UI is selected from among the one or more application UIs displayed through the window of the external cover, the controller 110 may execute a specific application corresponding to the specific application UI and display the executed application through the window of the external cover, and display one or more function UIs for controlling the application while it is displayed through the window of the external cover.

According to one example embodiment of the present disclosure, when a camera UI is selected from among the one or more application UIs, the controller 110 may execute a preview mode through the window by executing the camera application. The controller 110 may display one or more function UIs for controlling the camera application, visible through the window of the external cover. The controller 110 may also display an image captured by the camera unit in the preview mode.

According to another example embodiment of the present disclosure, when a call sending UI is selected from among the one or more application UIs, the controller 110 may display an input unit and a display unit for executing a phone call through the window of the external cover.

According to another example embodiment of the present disclosure, when a message is received while the external cover is closed, the controller 110 may display contents of the received message through the window of the external cover.

According to another example embodiment of the present disclosure, if the controller 110 detects a state change in the cover (i.e., from open to closed, or closed to open) during execution of an application, the controller 110 may maintain execution of the application despite the changed state of the external cover.

According to another example embodiment of the present disclosure, if an application is executed with the cover open, and the cover is then closed, controller 110 may display the application through the window of the external cover while maintaining the execution of the specific application.

The controller 110 may display one or more function UIs for controlling the specific application while displayed through the window of the external cover.

Further, when the application is being displayed through the window of a closer cover, and the cover is then opened, the controller 110 may switch from a window-based display mode to utilizing the full area of the display unit 160 to display the application, while maintaining the execution of the specific application.

According to another example embodiment of the present disclosure, when the second state of the external cover is generated during execution of a first application in the first state of the external cover, the controller 110 may execute a second application in the second state of the external cover.

According to the another example embodiment of the present disclosure, when an event corresponding to the second application is generated during the execution of the first application in the opened state of the external cover and the closed state of the external cover is generated, the controller 110 may execute the second application and display the generated event on the window of the external cover. In this case, the controller 110 may display one or more function UIs for processing the event during the execution the second application and the display of the second application on the window of the external cover.

Further, when the cover is opened during the execution of a second application displayed through the window of the cover, the controller 110 may change the display mode and display the first application utilizing the full display unit of the electronic device.

Further, according to another example embodiment of the present disclosure, when the second state of the external cover is generated after a specific function of a specific application is executed in the first state of the external cover, the controller 110 may display a result of the execution for the specific function in the second state of the external cover.

Further, according to another example embodiment of the present disclosure, when the closed state of the external cover is generated after the specific function of the specific application is executed in the opened state of the external cover, the controller 110 may display a result of the execution for the specific function of the specific application on the window of the external cover. In this case, the controller 110 may display one or more function UIs for processing the result of the execution during the display of the result of the execution for the specific function on the window of the external cover.

Further, when the opened state of the external cover is generated and detected during the display of the result of the execution of the specific function through the window of the external cover, the controller 110 executes the specific application and displays the execution on the display unit of the electronic device.

Further, according to another example embodiment of the present disclosure, when the external cover transitions from an open state to a closed state during execution of a function of an application before a predetermined time elapses, the controller 110 may display a result of the execution for the specific function of the specific application on the window of the external cover. Otherwise, after the predetermined time elapses, the controller 110 may maintain the execution for the specific application and display the execution of the specific application on the window of the external cover.

Any of the functions and steps provided in the Figures may be implemented in hardware, software or a combination of both and may be performed in whole or in part within the programmed instructions of a computer. No claim element herein is to be construed under the provisions of 35 U.S.C. 112, sixth paragraph, unless the element is expressly recited using the phrase "means for".

The functions and process steps herein may be performed automatically or wholly or partially in response to user command. An activity (including a step) performed automatically is performed in response to executable instruction or device operation without user direct initiation of the activity.

The terms "unit" or "module" referred to herein is to be understood as comprising hardware such as a processor or microprocessor configured for a certain desired functionality, or a non-transitory medium comprising machine executable code, in accordance with statutory subject matter under 35 U.S.C. §101 and does not constitute software per se.

Although the present disclosure has been described with reference to an embodiment shown in the drawings, it should be understood by those skilled in the art that the present disclosure may be changed and modified in various forms and include the equivalents thereof. Accordingly, the true technical protection over the present disclosure shall be determined on the basis of the ambit of the present disclosure as defined by the appended claims.

## Claims

1. An electronic device, comprising:
an external cover configured to cover a touchscreen in a closed position, and expose the touchscreen in an open position, the external cover having a window through which an exposed portion of the touchscreen is visible;
an external cover state detection unit that detects opening/closing of an external cover mounted in the electronic device; and
a controller configured to display one or more application UIs capable of executing one or more applications on a window of the external cover in a closed state of the external cover, and display the specific application and one or more function UIs for performing the specific application on the window of the external cover when a specific application UI is selected.

2. The electronic device of claim 1, wherein when a camera UI is selected from among the one or more application UIs, the controller configured to switch a mode of the window of the external cover into a preview mode by executing a camera application, and display one or more function UIs for performing a camera operation on the window of the external cover which displays an image received through a camera unit in the preview mode,
, wherein when a call sending UI is selected from among the one or more application UIs, the controller configured to display an input area and a display area for call sending on the window of the external cover,
wherein when a message is received on the closed state of the external cover, the controller configured to display contents of the received message on a partial area of the window of the external cover.

3. The electronic device of claim 1,
wherein the external cover state detection unit that detects a first state and a second state according to an opened/closed state of the external cover mounted on the electronic device; and
wherein the controller configured to maintain execution of a specific application in the second state of the external cover when the second state of the external cover is generated during the execution of the specific application in the first state of the external cover.

4. The electronic device of claim 3, wherein when the closed state of the external cover is generated during the execution of the specific application in an opened state of the external cover, the controller configured to display the specific application while maintaining execution of the specific application on the window of the external cover, and when the opened state of the external cover is generated during display of the specific application on the window of the external cover, the controller configured to display the specific application while maintaining execution of the specific application on a display unit of the electronic device,
wherein the controller configured to display one or more function UIs for executing the specific application during the display of the specific application on the window of the external cover.

5. The electronic device of claim 1,
wherein the external cover state detection unit that detects a first state and a second state according to an opened/closed state of the external cover mounted on the electronic device; and
wherein the controller configured to execute a second application in the second state of the external cover when the second state of the external cover is generated during execution of a first application in the first state of the external cover.

6. The electronic device of claim 5, wherein when an event corresponding to the second application is generated during execution of the first application in an opened state of the external cover, and a closed state of the external cover is generated, the controller configured to display the generated event on a window of the external cover by executing the second application, and when the opened state of the external cover is generated during display of the event by executing the second application on the window of the external cover, the controller configured to display the first application on a display unit of the electronic device,
wherein the controller configured to display one or more function UIs for processing the event during the display of the event on the window of the external cover by executing the second application.

7. The electronic device of claim 1,
wherein external cover state detection unit that detects a first state and a second state according to an opened/closed state of the external cover mounted on the electronic device; and
wherein controller configured to display a result of execution of a specific function in the second state of the external cover, when the second state of the external cover is generated after execution of the specific function of a specific application in the first state of the external cover.

8. The electronic device of claim 7, wherein when a closed state of the external cover is generated after the execution of the specific function of the specific application in the opened state of the external cover, the controller configured to display the result of the execution of the specific function of the specific application on a window of the external cover, and when the opened state of the external cover is generated during display of the result of the execution of the specific function on the window of the external cover, the controller configured to execute the specific application and displays the executed specific application on a display unit of the electronic device,
wherein the controller displays one or more function UIs for processing the result of the execution during the display of the result of the execution of the specific function on the window of the external cover.

9. A method of expanding a function of an electronic device, comprising:
displaying one or more application UIs capable of executing one or more applications on a window of the external cover in a closed state of the external cover mounted in the electronic device;
executing a specific application corresponding to a specific application UI when the specific application UI among the one or more application UIs is selected, and displaying the specific application on the window of the external cover; and
displaying one or more function UIs for performing the specific application on the window of the external cover on which the specific application is displayed.

10. The method of claim 9, further comprising:
switching a mode of the window to a preview mode by executing a camera application when a camera UI is selected from among the one or more application UIs, and displaying one or more function UIs for performing a camera operation on the window of the external cover which displays an image received through a camera unit in the preview mode,
when a call sending UI is selected from among the one or more application UIs, displaying an input area and a display area for call sending on the window of the external cover, displaying character data input through the input area on the display area, and when the call sending is selected through the input area, performing call sending with a telephone number corresponding to the character data displayed on the display area; and
when a message is received on a closed state of the external cover, displaying contents of the received message on a partial area of the window of the external cover, displaying a message view UI when all of the contents of the received message are not displayed on the partial area of the window of the external cover, and sequentially displaying all of the contents of the message on the partial area of the window of the external cover when the message view UI is selected.

11. The method of claim 10, further comprising:
executing a specific application in a first state of an external cover mounted in the electronic device; and
maintaining execution of a specific application in a second state of the external cover, when the second state of the external cover is generated during execution of the specific application in the first state of the external cover.

12. The method of claim 11, further comprising:
in a case where the first state of the external cover is an opened state of the external cover, and the second state of the external cover is a closed state of the external cover, when the closed state of the external cover is generated during execution of a specific application in the opened state of the external cover, displaying the specific application on the window of the external cover while maintaining execution of the specific application; and
when the opened state of the external cover is generated during display of the specific application in the opened state of the external cover, displaying the specific application on a display unit of the electronic device while maintaining execution of the specific application,
wherein, when the specific application is displayed on the window of the external cover, one or more function UIs for executing the specific application is displayed.

13. The method of claim 10, further comprising:
executing a first application in a first state of the external cover; and
executing a second application in a second state of the external cover when the second state of the external cover is generated during execution of the first application in the first state of the external cover.

14. The method of claim 13, further comprising:
in a case where the first state of the external cover is an opened state of the external cover, and the second state of the external cover is a closed state of the external cover, when an event corresponding to the second application is generated during execution of the first application in the opened state of the external cover and the closed state of the external cover is generated, displaying the generated event on the window of the external cover by executing the second application; and
when the opened state of the external cover is generated during display of the event on the window of the external cover by executing the second application, displaying the first application on a display unit of the electronic device,
wherein, when the event on the window of the external cover by executing the second application is displayed, one or more function UIs for processing the event is displayed

15. The method of claim 10, further comprising:
executing a specific application in a first state of an external cover; and
displaying a result of the execution of a specific function in a second state of the external cover when the second state of the external cover is generated after the specific function is executed during execution of the specific application in the first state of the external cover,
further comprising:
in a case where the first state of the external cover is an opened state of the external cover, and the second state of the external cover is a closed state of the external cover, when the closed state of the external cover is generated after execution of the specific function of the specific application in the opened state of the external cover, displaying a result of the execution of the specific function of the specific application on the window of the external cover; and
when the opened state of the external cover is generated during display of the result of the execution of the specific function on the window of the external cover, displaying the specific application on a display unit of the electronic device by executing the specific application,
wherein, when the result of the execution of the specific function on the window of the external cover is displayed, one or more function UIs for processing the result of the execution is displayed.
